# EUROPEAN PATENT APPLICATION

(11) **EP 4 201 885 A1**
(43) Date of publication of application: **28.06.2023**
(21) Application number: 21306919.8
(22) Date of filing: 23.12.2021
(51) Int. Cl.: C01F 7/34, C01F 7/441

(54) **PREPARATION OF ALPHA-ALUMINA IN SUPERCRITICAL FLUIDS**

(71) Applicant: ImerTech SAS, 75015 Paris (FR)
(72) Inventor: GRENIER, Guillaume, 69001 Lyon (FR); QUILFEN, Cyril, 69003 Lyon (FR)
(74) Representative: Haseltine Lake Kempner LLP

(57) **Abstract**

The present invention relates to a process for preparing α-alumina in supercritical fluids, to α-alumina obtained by the said process and to α-alumina particulates.

## Description

### FIELD OF THE INVENTION

The present invention relates to a process for preparing α-alumina in a supercritical fluid, to α-alumina obtained by the said process and to α-alumina particulates.

### BACKGROUND OF THE INVENTION

Alumina (aluminium oxide, Al₂O₃) is known to occur in metastable phases including γ-alumina, δ- alumina, θ- alumina and α-alumina. α-Alumina, also known as corundum, is the most thermodynamically stable phase of alumina. Due to the stability of α-alumina, including its high melting point, hardness, and resistance to the attack of strong inorganic acids, it has many applications. One such application is the use of α-alumina in abrasives and refractories.

There are various forms of naturally occurring α-alumina including a number of gemstones, which can be coloured due to impurities present in the corundum crystal. α-Alumina can also be synthesised using methods such as flame fusion, flux solution and hydrothermal synthesis. All known methods present challenges including the use of high levels of energy, high cost, and difficulties controlling the morphology and/or homogeneity of the product.

It is therefore desirable to provide an alternative method for preparing α-alumina to address the drawbacks of known methods of synthesis.

### SUMMARY OF THE INVENTION

The present invention is defined in the appended claims.

In accordance with a first aspect, there is provided a process for preparing alpha alumina, comprising the steps of:
(a) providing an aluminium precursor;
(b) mixing the aluminium precursor with a base in a solvent;
(c) aging the mixture of step (b) until the aluminium precursor is dissolved;
(d) treating the solution of (c) at a temperature and pressure above the critical point of the solvent used.

In accordance with a second aspect, there is provided α-alumina obtainable according to the process of the first aspect.

In accordance with a third aspect is provided α-alumina particulates in the form of a polyhedron.

Certain embodiments of the present invention may provide one or more of the following advantages:
- desired ease of synthesis of α-alumina;
- desired cost of synthesis;
- desired conversion to the single form of alumina, namely α-alumina;
- desired morphology of α-alumina;
- desired homogeneity of the α-alumina particles;
- desired particle size of the α-alumina particles;
- desired low temperature synthesis.

The details, examples and preferences provided in relation to any particular one or more of the stated aspects of the present invention apply equally to all aspects of the present invention. Any combination of the embodiments, examples and preferences described herein in all possible variations thereof is encompassed by the present invention unless otherwise indicated herein, or otherwise clearly contradicted by context.

### BRIEF DESCRIPTION OF THE DRAWINGS

The invention will further be illustrated by reference to the following figures:
Fig. 1: an example of the apparatus used to prepare α-alumina;

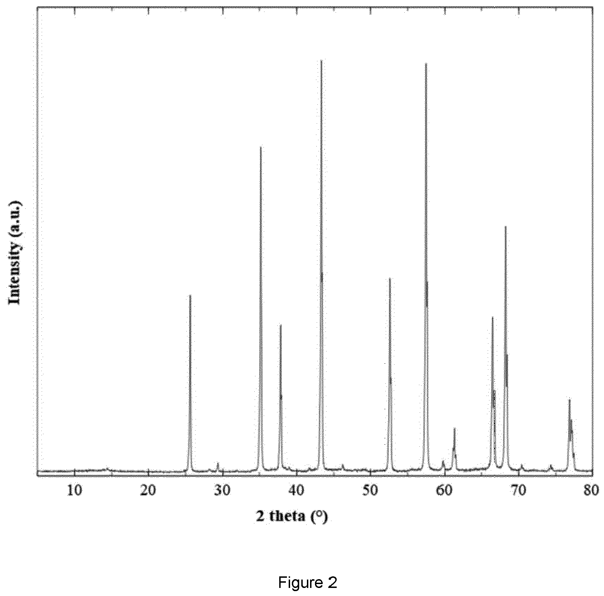

Fig. 2: XRD of product from Example 1;
Fig. 3: SEM of product from Example 1 shown in both Fig. 3a and Fig. 3b;

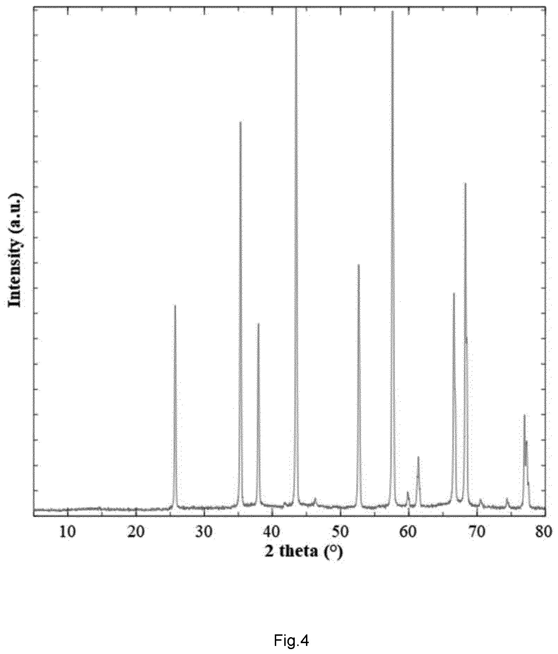

Fig. 4: XRD of product from Example 2;

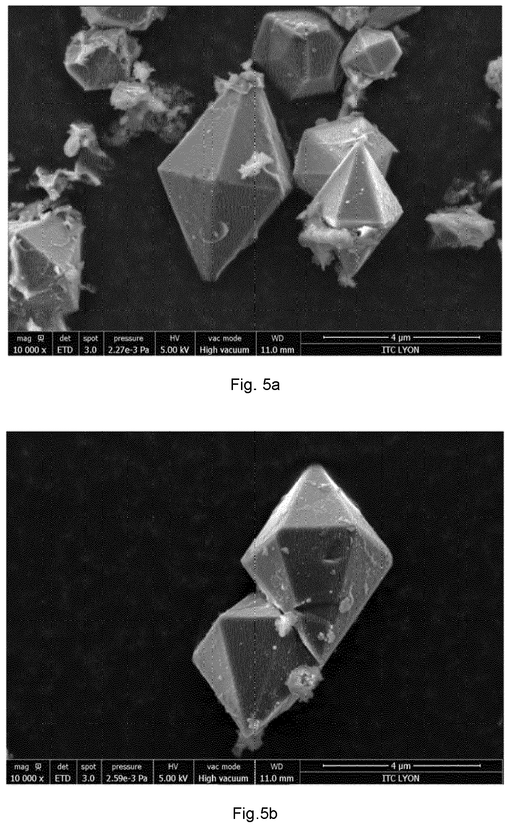

Fig. 5: SEM of product from Example 2 shown in both Fig. 5a and Fig. 5b;

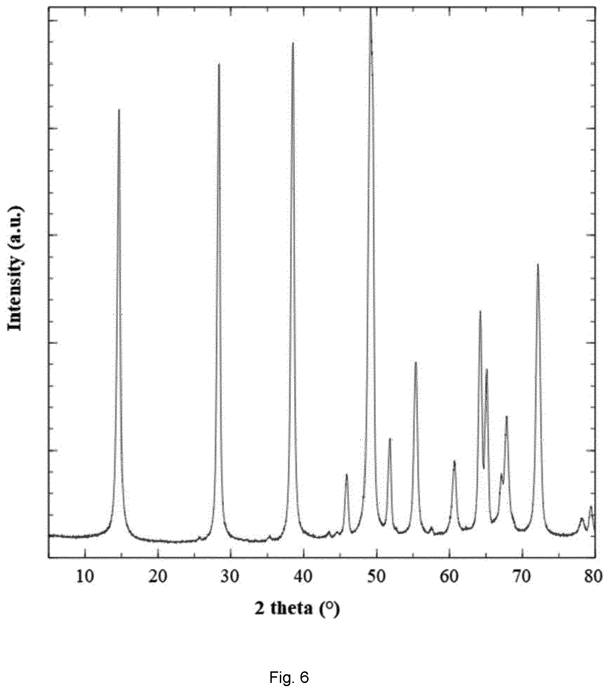

Fig. 6: XRD of product from Example 3;

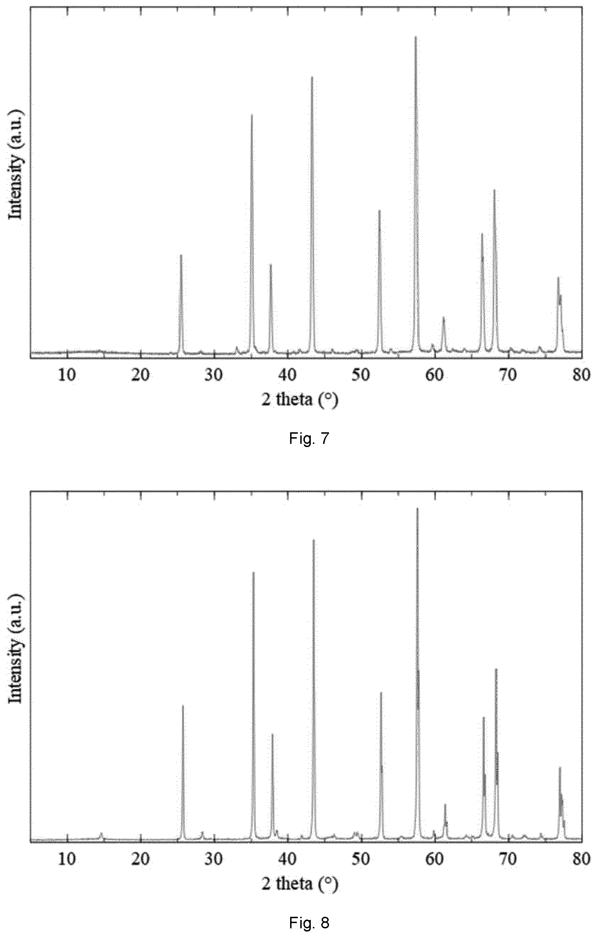

Fig. 7: XRD of product from Example 4;
Fig. 8: XRD of product from Example 5.

It is understood that the following description and references to the figures concern exemplary embodiments of the present invention and shall not be limiting the scope of the claims.

### DETAILED DESCRIPTION

The present invention is based on the surprising finding that α-alumina can be efficiently prepared using the process disclosed herein. The present invention utilises supercritical fluids (SCFs) to obtain α-alumina, which has not been shown to be successful in the art. SCFs are substances where distinct liquid and gas phases do not exist at a temperature and pressure above its critical point. For example, the density of the SCF is about 200 to 400 times that of the gaseous state and can therefore resemble a liquid state. The viscosity of SCFs is, however, similar to that of the gaseous state. Furthermore, the diffusion coefficient of SCFs is lower than of a gas, but higher than of a liquid. The critical point is unique for every substance. For example, for water the critical temperature (*T_{c}*) is 647 K and the critical pressure (*p_{c}*) is 221 bar. It has been found that when applying the process of the present invention, wherein an aluminium precursor is mixed with a base in a solvent, followed by aging and treating above the critical point of the solvent, α-alumina is obtained.

In some embodiments, the aluminium precursor is selected from aluminium nitrate, aluminium sulfate, aluminium chloride, or combinations thereof. In some examples the aluminium precursor is aluminium nitrate. In some examples the aluminium precursor is aluminium sulfate. In some examples the precursor is aluminium chloride.

The aluminium precursor may be used in combination with a solvent. In some embodiments, the solvent is selected from water, ethanol, methanol or combinations thereof. In some examples the solvent is water. In some examples the solvent is ethanol. In some examples the solvent is methanol.

In some embodiments the aluminium precursor in a solvent has a concentration of about 0.2M. For example, the aluminium precursor in a solvent has a concentration of about 0.001M to about 7.5M. In some examples, the aluminium precursor has a concentration of from about 0.005M to about 7.0M, or from about 0.01M to about 6.5M, or from about 0.05M to about 6.0M, or from about 0.1M to about 5.5M, or from about 0. 5M to about 5.0M, or from about 1.0M to about 4.5M, or from about 1.5M to about 4.0M, or from about 2.0M to about 3.5M, or from about 2.5M to about 3.0M.

In some examples, the solvent is water and the aluminium precursor in water has a concentration of from about 0.005M to about 7.0M, or from about 0.01M to about 6.5M, or from about 0.05M to about 6.0M, or from about 0.1M to about 5.5M, or from about 0. 5M to about 5.0M, or from about 1.0M to about 4.5M, or from about 1.5M to about 4.0M, or from about 2.0M to about 3.5M, or from about 2.5M to about 3.0M.

In some examples, the solvent is methanol and the aluminium precursor in methanol has a concentration of from about 0.005M to about 7.0M, or from about 0.01M to about 6.5M, or from about 0.05M to about 6.0M, or from about 0.1M to about 5.5M, or from about 0. 5M to about 5.0M, or from about 1.0M to about 4.5M, or from about 1.5M to about 4.0M, or from about 2.0M to about 3.5M, or from about 2.5M to about 3.0M.

In some examples, the solvent is ethanol and the aluminium precursor in ethanol has a concentration of from about 0.005M to about 7.0M, or from about 0.01M to about 6.5M, or from about 0.05M to about 6.0M, or from about 0.1M to about 5.5M, or from about 0. 5M to about 5.0M, or from about 1.0M to about 4.5M, or from about 1.5M to about 4.0M, or from about 2.0M to about 3.5M, or from about 2.5M to about 3.0M.

At 100 °C, aluminium nitrate is soluble in water (160g/100mL), in ethanol (8.63g/100mL) and methanol (14.45g/100mL). At 20 °C, aluminium nitrate nonahydrate has a solubility of (67g/100 mL). For example, aluminium nitrate has a maximum concentration in water of 7.5 M, a maximum concentration in ethanol of 0.41 M and a maximum concentration in methanol of 0.68 M. Aluminium sulfate is soluble in water (2.71g/mL) and are sparingly soluble in alcohols. Aluminium chloride is soluble in water, in ethanol.

In some embodiments, the base is selected from sodium hydroxide, potassium hydroxide, urea pyridine, methylamine, imidazole, histidine, guanidine or a combination thereof. In some embodiments, the base is selected from sodium hydroxide, potassium hydroxide or a combination thereof. In some examples the base is sodium hydroxide. In some examples the base is potassium hydroxide.

In some embodiments, the base may be used in combination with a solvent. In some embodiments, the solvent is selected from water, ethanol, methanol, or combinations thereof. In some examples the solvent is water. In some examples the solvent is ethanol. In some examples the solvent is methanol. In some examples the solvent mixed with the aluminium precursor is the same solvent mixed with the base.

In some embodiments, the base is mixed with water and the basic solution has a concentration of 0.5M. For example, the base has a concentration of about 0.0025M to about 18.75M. In some examples, the aluminium precursor has a concentration of from about 0.0125M to about 17.5M, or from about 0.025M to about 16.25M, or from about 0.125M to about 15.0M, or from about 0.25M to about 13.75M, or from about 1.25M to about 12.5M, or from about 2.5M to about 11.25M, or from about 3.75M to about 10.0M, or from about 5.0M to about 8.75M, or from about 6.25M to about 7.5M. For example, the base to water ratio is from about 1:2.0 to 1:3.0. For example, the base to water ratio is 1:2:5.

In some embodiments the mixing step (b) is carried out at a temperature from about 20 °C to about 100 °C. For example, the mixing step (b) is carried out at a temperature of from about 20 °C to about 90 °C, or from about 20 °C to about 60 °C, or from about 20 °C to about 40 °C, or from about 20 °C to about 30 °C, or from about 25°C to about 30°C. For example, the mixing step (b) is carried out at a temperature of from about 30 °C to about 90 °C, or from about 40 °C to about 80 °C, or from about 50 °C to about 70 °C, or from about 55 °C to about 60 °C.

In some embodiments, the solution of aluminium precursor after completion of step (c) has a pH of between about 4 and about 6. For example, the pH of the dissolved aluminium precursor after completion of step (c) is about 4.5, or about 5, or about 5.5.

In some embodiments, the mixture of step (c) is stirred at a rate from about 20 rpm to about 1500 rpm. For example, the mixture of step (c) is stirred at a rate of from about 50 rpm to about 1450 rpm, or at rate of from about 100 rpm to about 1400 rpm, or at a rate from about 300 rpm to about 1300 rpm, or at a rate from about 500 rpm to about 1100 rpm, or at a rate from about 700 rpm to about 900 rpm, or at a rate of about 500 rpm.

In some embodiments, step (c) is carried out at a temperature of from about 25 °C to about 100 °C. For example, step (c) is carried out at a temperature of from about 25 °C to about 75 °C.

In some embodiments, step (c) is carried out for at least 0.5h. For example, step (c) is carried out for at least about 1h, or about 2h, or about 2.5h, or about 3h, or about 3.5h, or about 4h, or about 4.5h, or about 5h, or about 5.5h or about 6h.

In some embodiments, step (c) is carried out at 25 °C for at least 2h. For example, step (c) is carried out at 25 °C for at least about 3h, or about 3.5h, or about 4h, or about 4.5h, or about 5h, or about 5.5h or about 6h.

In some embodiments, step (c) is carried out at 50 °C for at least 2h. For example, step (c) is carried out at 25 °C for at least about 3h, or about 3.5h, or about 4h, or about 4.5h, or about 5h, or about 5.5h or about 6h.

In some embodiments, step (c) is carried out at 75 °C for at least 2h. For example, step (c) is carried out at 25 °C for at least about 3h, or about 3.5h, or about 4h, or about 4.5h, or about 5h, or about 5.5h or about 6h.

In some embodiments, step (c) is carried out at 100 °C for at least 2h. For example, step (c) is carried out at 25 °C for at least about 3h, or about 3.5h, or about 4h, or about 4.5h, or about 5h, or about 5.5h or about 6h.

In some embodiments, step (c) is aged until the mixture is transparent. Determining whether the mixture is transparent can be carried out using any known method. For example, the delta back scattering number may be used to determine transparency. When the delta back scattering number is negative, the solution is transparent. When the delta back scattering number is positive, the solution is turbid. In some examples, the Turbiscal Lab apparatus may be used. In some examples, the transparency of the mixture is determined by DIN ISO 18748.

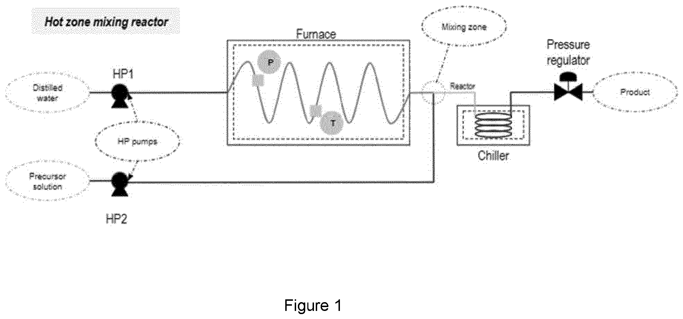

In some embodiments, step (d) is carried out in a hot zone mixing reactor. An example of a hot zone mixing reactor is depicted in Fig 1. In some embodiments, the temperature used in step (d) is from about 400 °C to about 1000 °C. For example, the temperature used in step (d) is from about 420 °C to about 950 °C, or from about 440 °C to about 900 °C, or from about 450 °C to about 850 °C, or from about 460 °C to about 800 °C, or from about 480 °C to about 700 °C, or from about 500 °C to about 650 °C, or from about 550 °C to about 600 °C. In some examples, the temperature used in step (d) is from about 450 °C to about 500 °C.

In some embodiments, the pressure used in step (d) is from about 10 bar to about 500 bar. For example, the pressure used in step (d) is from about 25 bar to about 450 bar, or from about 50 bar to about 400 bar, or from about 100 bar to about 350 bar, or from about 150 bar to about 300 bar, or from about 200 bar to about 250 bar, or from about 230 bar to about 500 bar.

In some embodiments step (d) is carried out in a reactor at the said temperature and said pressure for a time of between about 0.5 ms and about 50 days. For example, step (d) is carried out in reactor at the said temperature and said pressure for a time of about 10 ms, about 100 ms, about 500 ms, about 1 s, about 10 s, about 30 s, about 1 min, about 30 mins, about 1h, about 6h, about 12h, about 18h, about 1 day, about 5 days, about 10 days, about 15 days, about 20 days, about 25 days, about 30 days, about 35 days, about 40 days about 45 days or about 50 days.

In some embodiments α-alumina particulates in the form of a polyhedron are provided. The inventors of the present invention have surprisingly found that a controlled morphology of the α-alumina particulates can be obtained in terms of the shape of the α-alumina particulates. In some embodiment the morphology of the α-alumina particulates can be controlled in relation to the percentage polyhedron formed in relation to the total amount of particulates formed. In some embodiments α-alumina particulates in the form of a polyhedron make up about 10% of the total sample, or up to about 20% of the total sample, or up to about 30% of the total sample, or up to about 40% of the total sample, or up to about 50% of the total sample, or up to about 60% of the total sample, or up to about 70% of the total sample, or up to about 80% of the total sample, or up to about 90% of the total sample, or up to about 95% of the total sample, or up to about 99% of the total sample, or up to about 100% of the total sample.

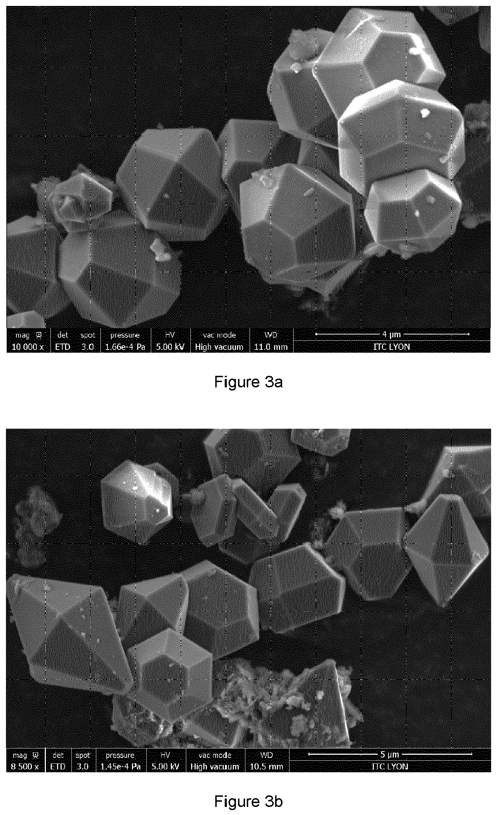

In some embodiments the polyhedron of the α-alumina particulates has at least 12 faces, or at least 13 faces, or at least 14 faces, or 12 faces, or 13 faces, or 14 faces, or 15 faces or 16 faces. In some embodiments the polyhedron is a hexagonal bipyramid. In some embodiments polyhedron is a truncated hexagonal bipyramid. A truncated hexaganal bipyramid is generally known as a hexagonal bipyramid, wherein the two further peaks opposite on another have been truncated to form two further faces. In some embodiments polyhedron is a truncated hexagonal bipyramid according to figure 3a or figure 3b

In certain embodiments, the process according to the invention may have one or more of the following effects:
- increased efficiency of preparation;
- reduced pressure used in the process;
- reduced temperature used in the process;
- reduced temperature used in the process in comparison to conventional thermal processes such as fusion or calcination;
- increased purity of the product;
- a good control of the morphology;
- a good homogeneity of the product.

The present disclosure may be described by one or more of the following paragraphs:
1. A process for preparing alpha alumina, comprising the steps of:
   (a) providing an aluminium precursor;
   (b) mixing the aluminium precursor with a base in a solvent;
   (c) aging the mixture of step (b) until the aluminium precursor is dissolved;
   (d) treating the solution of (c) at a temperature and pressure above the critical point of the solvent used.
2. The process according to paragraph 1, wherein the aluminium precursor is selected from aluminium nitrate, aluminium sulfate, aluminium chloride, or combinations thereof.
3. The process according to paragraph 1 or paragraph 2, wherein solvent is selected from water, ethanol, methanol, or combinations thereof.
4. The process according to any one of the preceding paragraphs, wherein the base is selected from sodium hydroxide, potassium hydroxide or a combination thereof.
5. The process according to any one of the preceding paragraphs, wherein the solvent is water.
6. The process according to any one of the preceding paragraphs, wherein mixing in step (b) is carried out at a temperature of from about 20 °C to about 100 °C.
7. The process according to any one of the preceding paragraphs, wherein the pH of step (c) is between about 4 and about 6.
8. The process according to any one of the preceding paragraphs, wherein step (c) is carried out at a temperature of from about 25 °C to about 100 °C.
9. The process according to any one of the preceding paragraphs, wherein the mixture of step (c) is stirred at a rate of between 20 rpm and 1500 rpm.
10. The process according to any one of the preceding paragraphs, wherein step (c) is carried out for at least 0.5h.
11. The process according to any one of the preceding paragraphs, wherein step (c) is aged until the mixture is transparent.
12. The process according to paragraph K, the transparency of the mixture is determined by DIN ISO 18748.
13. The process according to any one of the preceding paragraphs, wherein the temperature used in step (d) is from about 400 °C to about 1000 °C, and the pressure used in step (d) is from about 10 bar to about 500 bar.
14. The process according to any one of the preceding paragraphs, wherein the temperature used in step (d) is from about 400 °C to about 700 °C, and the pressure used in step (d) is from about 230 bar to about 500 bar.
15. The process according to any one of the preceding paragraphs, wherein the reactor treats the reactants at the said temperature and said pressure for a time of between 5 ms and 50 days.
16. α-Alumina obtainable according to the process of any one of paragraphs 1 to 15.
17. α-Alumina particulates in the form of a polyhedron.
18. The α-alumina particulates of paragraph 17, wherein the polyhedron has at least 12 faces.
19. The α-alumina particulates of paragraph 17 or paragraph 18, wherein the polyhedron is a hexagonal bipyramid.
20. The α-alumina particulates of paragraph 17 or paragraph 18, wherein the polyhedron is a truncated hexagonal bipyramid.

### EXAMPLES

The apparatus used to prepare α-alumina is depicted in Figure 1. Figure 1 is a schematic and is described in the following. In addition to providing the general details of the apparatus, specific details of the apparatus used for the examples disclosed herein are also provided.

As seen in Fig. 1, two high pressure pumps are used (JASCO PU-4086) are used to circulate the fluid under pressure into the process. The operating pressure of the following examples is 250 bar. The pressure is maintained into the process by using a back pressure regulator (Swagelok BSN2-02-5-VVK). The water is heated up through a tube placed into the furnace (CERADEL Industries PTF 12/105/500). The tube (from HP1 to reactor) placed in the furnace is made of Hastelloy C-276 and has a length of 12 m and an outer diameter of ⅛ inches. The injection tube (from the HP2 pump to reactor) is made of stainless steel 316L. The reactor consists of a Tee ⅛ inches from Swagelok made of SS316L. The product is formed when the supercritical water is mixed with the precursor solution. The slurry is then cooled down in the chiller which consists of a co current heat exchanger (the slurry circulates in a ⅛ inches SS316L tube and the cooling water circulates in a ½ inches SS316L tube). Once the slurry is cooled down, it passes through the back pressure regulator where the pressure is decreased to atmospheric pressure.

### Method 1

A solution of 200 mL of aluminium nitrate (Al(NO₃)₃.9H₂0, Alfa Aesar) in water at 0.2M is prepared and a solution of 200 mL of base (B) in water at 0.5M is prepared. Once both precursors are dissolved into their respective beakers, the solution of base (B) is added to the aluminium nitrate solution under stirring (500 rpm). The resulting solution is then aged for a specific amount of time (Aging Time, AT) under stirring.

Using the continuous reactor as disclosed in Fig. 1, the distilled water is introduced into the process through the HP1 and HP2 pump with a flow of 20 mL/min for HP1 and 7 mL/min for HP2. When the water is flowing out through the back pressure regulator (BPR), the pressure is gradually increased up to 250 bar by screwing the BPR. The pressure in the process is set to the working pressure (250 bar) and the temperature of the furnace is set to a predetermined temperature (Furnace Temperature, FT). Once the temperature and pressure has stabilized, the temperature measured after the reactor is measured (Temperature after furnace, AFT), and once this temperature is reached, the HP2 pump is fed with the previously prepared and aged solution. The flow rate for HP1 is at 20 mL/min and the flowrate for HP2 is at 7 mL/min. The solution of the precursor is then continuously injected into the process and the resulting material is recovered after the BPR continuously. Once the totality of the solution is passed through the process, the process is shut down and the resulting material recovered in a beaker.

The recovered slurry is then centrifuged to recover the solid and the solid is washed 5 times by repeating the centrifugation step after having added the same volume than the one removed at each step. Once these steps are finished, the sample is dried in an oven at 200°C and then characterized by X-Ray-diffraction (XRD) and/or Scanning Electron Microscope (SEM). XRD and SEM may be carried out by any known method.

The XRD measurements may be obtained by the following method. A sample of the particulate is milled to a particle size (by sedigraph) of less than 10 µm. A lump-free powder is generated and inserted into an XRD sample holder by back filling, using a suitable method to ensure that preferential orientation is avoided. The sample is scanned on the XRD (for example a D8 Advance A25 Bruker with Bragg-Brentano Geometry and K430 X-ray generator). The CuK_{α1α2} (λ1 = 1.54060 Å, λ2 = 1.54439 Å) radiations are generated at 40 kV and 45 mA, between 2θ = 5° and 2θ = 80° using a step size of 0.0019°. The scan is viewed on the XRD analysis software HighScore Plus (available from Malvern Panalytical) or DIFFRAC.EVA (available from Bruker) and XRD peaks are assigned according to the PDF-2 minerals database (available from the International Centre for Diffraction Data). XRD peak information is also available from public databases (such as the Mineralogy Database at http://webmineral.com). The amount of each mineral in the sample is determined from the corresponding XRD peak heights by the Reference Intensity Ratio (RIR) method. In the present examples, Malvern Panalytical X'Pert PRO was used.

In the present examples, the products obtained were observed by Scanning Electron Microscope (FEI Quanta Feg 250).

Example 1 was carried out to obtain example numbers (Ex.No.) 1 to 5 as shown in Tables 1 and 2. Ex.No. 1, 2, 4 and 5 are according to the invention. Ex.No. 3 is a comparative example wherein no base was used. As can be seen from the results in Table 2, in the examples according to the invention, resulting in the formation of α-alumina, with a homogeneous morphology and the particulates according to the present invention.

**Table 1:**

| Ex. No. | Amount of aluminium nitrate (mL) / Concentration of aluminium nitrate (M) | Base (B) /amount of base (mL)/ concentration (M) | Aging Time (AT) / h | Furnace Temperature (FT) / °C | Temperature after furnace (AFT) / °C | HP1 pump flow rate (mL/min) | HP2 pump flow rate /mL/min) |
|---|---|---|---|---|---|---|---|
| 1 | 200/0.2 | NaOH/200/0.5 | 70 | 750 | 450 | 20 | 7 |
| 2 | 200/0.2 | KOH/200/0.5 | 550 | 750 | 450 | 20 | 7 |
| 3 (comp) | 200/0.2 | - | - | 600 | 450 | 20 | 7 |
| 4 | 200/0.1 | KOH /535/0.1 | 192 | 650 | 450 | 10 | 3 |
| 5 | 500/0.1 | KOH/500/0.25 | 192 | 750 | 450 | 20 | 6 |

**Table 2:**

| Ex. No. | XRD | XRD Shows | SEM | SEM Shows |
|---|---|---|---|---|
| 1 | Fig. 2 | α-alumina | Fig. 3a and 3b | homogeneous and have a well-defined shape. |
| 2 | Fig. 4 | α-alumina | Fig. 5a and 5b | homogeneous and have a well-defined shape. |
| 3 (comp) | Fig. 6 | Almost all boehmite | - | - |
| 4 | Fig. 7 | α-alumina | - | - |
| 5 | Fig. 8 | α-alumina | - | - |

## Claims

1. A process for preparing alpha alumina, comprising the steps of:
(a) providing an aluminium precursor;
(b) mixing the aluminium precursor with a base in a solvent;
(c) aging the mixture of step (b) until the aluminium precursor is dissolved;
(d) treating the solution of (c) at a temperature and pressure above the critical point of the solvent used.

2. The process according to claim 1, wherein the aluminium precursor is selected from aluminium nitrate, aluminium sulfate, aluminium chloride, or combinations thereof.

3. The process according to claim 1 or claim 2, wherein solvent is selected from water, ethanol, methanol, or combinations thereof, preferably wherein the solvent is water.

4. The process according to any one of the preceding claims, wherein the base is selected from sodium hydroxide, potassium hydroxide or a combination thereof.

5. The process according to any one of the preceding claims, wherein mixing in step (b) is carried out at a temperature of from about 20 °C to about 100 °C.

6. The process according to any one of the preceding claims, wherein the pH of step (c) is between about 4 and about 6.

7. The process according to any one of the preceding claims, wherein step (c) is carried out at a temperature of from about 25 °C to about 100 °C.

8. The process according to any one of the preceding claims, wherein the mixture of step (c) is stirred at a rate of between 20 rpm and 1500 rpm.

9. The process according to any one of the preceding claims, wherein step (c) is carried out for at least 0.5h.

10. The process according to any one of the preceding claims, wherein step (c) is aged until the mixture is transparent, wherein the transparency is determined by DIN ISO 18748.

11. The process according to any one of the preceding claims, wherein the temperature used in step (d) is from about 400 °C to about 1000 °C, or from about 400 °C to about 700 °C, and the pressure used in step (d) is from about 10 bar to about 500 bar, or from about 230 bar to about 500 bar.

12. The process according to any one of the preceding claims, wherein the reactor treats the reactants at the said temperature and said pressure for a time of between 5 ms and 50 days.

13. α-Alumina obtainable according to the process of any one of claims 1 to 12.

14. α-Alumina particulates in the form of a polyhedron, wherein the polyhedron has at least 12 faces.

15. The α-alumina particulates of claim 14, wherein the polyhedron is a hexagonal bipyramid or a truncated hexagonal bipyramid.
